Europäisches Patentamt

European Patent Office

Office européen des brevets

(11) Veröffentlichungsnummer: **0 038 554**
A1

## (12) EUROPÄISCHE PATENTANMELDUNG

(21) Anmeldenummer: 81103010.5

(22) Anmeldetag: 21.04.81

(51) Int. Cl.³: **B 07 B 1/10**
B 07 B 13/16, B 65 G 17/12

(30) Priorität: **22.04.80 DE 8010892 U**

(43) Veröffentlichungstag der Anmeldung:
28.10.81 Patentblatt 81/43

(84) Benannte Vertragsstaaten:
AT BE CH FR GB IT LI NL SE

(71) Anmelder: Rudolf Peter KG, Kies- und Betonwerke
Richard-Haniel-Strasse 3
D-7570 Baden-Baden 24(DE)

(72) Erfinder: Peter, Rudolf
Ooser Gartenstrasse 6
D-7570 Baden-Baden(DE)

(74) Vertreter: Trappenberg, Hans Europäischer
Patentvertreter
Postfach 1909 Wendtstrasse 1
D-7500 Karlsruhe 21(DE)

(54) Rost.

(57) Die Erfindung betrifft einen Rost zum Sichten und Sortieren von stückigem Gut, bei dem das den Rost passierende Feingut unter den Rost abgezogen und das Grobgut durch Bewegen des Rostes abgeworfen wird. Statt des bisherigen Hochkippens des Rostes, um das Grobgut zu entfernen, wird nach der Erfindung vorgeschlagen, den Rost durch zwei, im Abstand der Rostbreite nebeneinander angeordnete, synchron antreibbare endlose Ketten, die zumindest teilweise über aufgesetzte Roststäbe (3) miteinander verbunden sind, zu bilden und diesen Rost dann über zwei endständige Rollenpaare (8) zu führen, wobei die Roststäbe an der Abwurfstelle aufspreizen und somit das Grobgut sicher abgeworfen wird.

Fig.1

EP 0 038 554 A1

0038554

HANS TRAPPENBERG · PATENTINGENIEUR · KARLSRUHE

PR 401
07.04.1981 TR/nl

Rudolf Peter KG, Kies- und Betonwerke
Richard-Haniel-Str. 3, 7570 Baden-Baden 24

## Rost

Die Erfindung betrifft einen Rost zum Sichten und Sortieren von stückigem Gut, bei dem das den Rost passierende Feingut unter dem Rost abgezogen und das Grobgut durch Bewegen des Rostes abgeworfen wird.

Derartige Roste werden beispielsweise in Kieswerken und anderen Rohstoff gewinnenden Betrieben benötigt, wo auf den über einem Bunker befindlichen Rost das gesamte geförderte Gut aufgegeben wird, wobei das Feingut - der Kies - durch den Rost hindurch in den Bunker fällt und gröberes Gut - Felsgestein, Lehmklumpen und ähnliches - durch den Rost zurückgehalten wird. Dieses nun auf dem Rost liegende Grobgut muß, um den Fortgang der Arbeit nicht zu behindern, bisher von Hand, in teilweise mühsamer Arbeit, entfernt werden. Selbstverständlich ist der Einsatz solcher Roste nicht nur auf Kieswerke beschränkt, sondern überall dort erforderlich, wo stückiges Feingut von entsprechendem Grobgut zu trennen ist.

Um das mühsame manuelle Entfernen des Grobgutes von dem Rost weitgehend zu vermeiden, sind auch Kipproste bekannt geworden, die um eine seitliche Achse hochschwenkbar sind. Das auf dem Rost befindliche Grobgut kann nach dem Hochschwenken des Rostes über den Rost hinwegrutschen beziehungsweise -rollen und beispielsweise über eine Schurre weitergeleitet werden. Hierzu ist jedoch nicht nur eine verhältnismäßig hohe Gesamt-Konstruktion notwendig, sondern es ist auch festzuhalten, daß durch das teilweise recht hohe Gewicht des Grobgutes Beschädigungen beim Herabfallen vorkommen können. Außerdem kann sich das Grobgut in den Roststäben festklemmen, so daß es doch wieder in an sich zu vermeidender Handarbeit entfernt werden muß.

Die Erfindung hat sich die Aufgabe gestellt, einen derartigen Rost anzugeben, der nicht nach oben verschwenkt werden muß und daher keine hohe und schwere Konstruktion benötigt und der sicher auch verklemmtes Grobgut abwirft und damit das mühsame manuelle Entfernen des Grobgutes vom Rost vermeidet.

Erreicht wird dies nach der Erfindung durch zwei im Abstand der Rostbreite nebeneinander angeordnete synchron antreibbare endlose Ketten, die über zwei endständige Rollenpaare geführt sind und deren Kettenglieder zumindest teilweise über aufgesetzte Roststäbe miteinander verbunden sind.

Nach der Erfindung wird also ein "Wanderrost" eingesetzt, der die Aufgabe hat, das Grobgut in Laufrichtung wegzubefördern. Hierbei wird auch zwischen den Roststäben eingeklemmtes Material einwandfrei abgeworfen, da sich der Abstand zwischen den einzelnen Roststäben am abwurfseitigen Umkehrpunkt der Ketten bei dem dortigen Rollenpaar vergrößert - bis zu 50 % öffnet - und damit die Klemmung aufgehoben wird. Um bei dieser Vergrößerung des Abstandes der einzelnen Roststäbe voneinander ein Durchrutschen des Materials zu vermeiden, wird nach der Erfindung zwischen den Rollen des abwurfseitigen Rollenpaares eine die Rostbreite überspannende, etwa dem Rollendurchmesser entsprechende, zylindrische Trommel drehbar angeordnet. Gegenüber einem hier auch einsetzbaren, dem gleichen Zweck dienenden Gleitblech, wird eine derartige drehbare Trommel, die durchaus auch mit den Rollen des Rollenpaares verbunden sein kann, praktisch nicht beschädigt. Um eine ausreichende Abstandsvergrößerung zwischen den Roststäben zu erreichen, empfiehlt es sich, die Roststäbe U-förmig auszubilden und sie mit kurzen vertikalen Schenkeln auf die Kettenglieder aufzusetzen. Dadurch spreizen sie sich am Umkehrpunkt bei den Rollenpaaren soweit auseinander, daß auch sehr sperrige Stücke mit Sicherheit aus den Roststäben herausrutschen können.

Zur Verfestigung des Rostes nach der Erfindung empfiehlt es sich, daß an den Roststäben, den Abstand zwischen zwei Roststäben überbrückende, Distanzstücke angebracht sind. Dem gleichen Zwecke dienlich ist, daß unterhalb des oberseitigen Trums der Ketten Tragschienen angeordnet sind. Die Ketten können durchaus einfache Rundglieder-Ketten sein; um eine auch auf Dauer einwandfreie Führung der Roststäbe zu erhalten, empfiehlt es sich jedoch, Gelenkketten einzusetzen.

Erwähnenswert ist, daß durch diese erfindungsgemäße Ausführung des Rostes nicht nur gegenüber dem bekannten Kipprost Energie eingespart wird, sondern daß auch auf die recht reparaturanfälligen, teuren Hydraulik-Kippzylinder verzichtet werden kann.

Auf der Zeichnung ist ein Ausführungsbeispiel des Erfindungsgegenstandes schematisch dargestellt, und zwar zeigen:

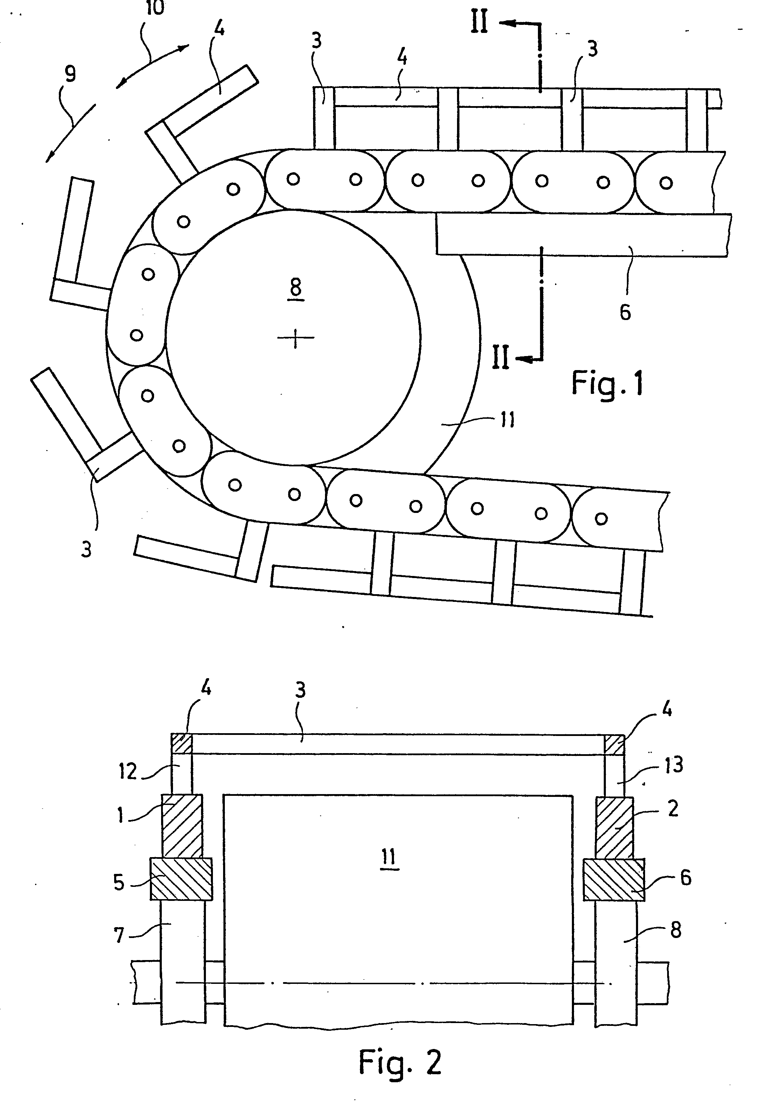

Fig. 1 einen Ausschnitt bei der Abwurfstelle des Rostes und

Fig. 2 einen Querschnitt nach II-II der Fig. 1.

Auf zwei im Abstand nebeneinander angeordnete Gelenkketten 1, 2 sind U-förmig ausgebildete Roststäbe 3 aufgesetzt und mit den einzelnen Kettengliedern der Ketten 1, 2 verbunden. An den Roststäben 3 sind Distanzstücke 4 angebracht, die den Abstand zwischen zwei Roststäben 3 überbrücken. Die Ketten 1, 2 gleiten auf Tragschienen 5, 6 und sind jeweils durch Rollen 7, 8 synchron angetrieben. Der Antrieb kann hierbei kontinuierlich in Richtung des Pfeiles 9 erfolgen oder es kann auch ein Reversierantrieb vorgesehen sein. Im ersteren Falle wird der Rost um eine Rostbreite verfahren und sodann stillgesetzt; im zweiten Falle wird der Rost wiederum um eine Rostbreite verfahren, dann jedoch, nach Abwurf des Grobgutes, in seine vorherige Stellung zurückgeführt. Die letztere Ausführung hat den Vorteil, daß Roststäbe 3 jeweils nur für eine Rostbreite auf den Ketten 1, 2 aufgesetzt werden müssen.

Unterhalb der Roststäbe 3 ist an der Umlenkstelle der Ketten 1, 2 zwischen den dort befindlichen Rollen 7, 8 eine die Rostbreite überspannende, etwa dem Durchmesser der Rollen 7, 8 entsprechende zylindrische Trommel 11 drehbar angeordnet, die ein Durchrutschen des durch das gegenseitige Aufspreizen der Roststäbe 13 am Umlenkpunkt freiwerdende Grobgut verhindert.

0038554

HANS TRAPPENBERG · PATENTINGENIEUR · KARLSRUHE

PR 401
07.04.1981 TR/nl

Rudolf Peter KG, Kies- und Betonwerke,
Richard-Haniel-Str. 3, 7570 Baden-Baden 24

P A T E N T A N S P R Ü C H E

1. Rost zum Sichten und Sortieren von stückigem Gut,
bei dem das den Rost passierende Feingut unter dem
Rost abgezogen und das Grobgut durch Bewegen des
Rostes abgeworfen wird,
gekennzeichnet
durch zwei im Abstand der Rostbreite nebeneinander
angeordnete synchron antreibbare endlose Ketten
(1, 2), die über zwei endständige Rollenpaare (7,
8) geführt sind und deren Kettenglieder zumindest
teilweise über aufgesetzte Roststäbe (3) miteinander verbunden sind.

2. Rost nach Anspruch 1,
   dadurch gekennzeichnet,
   daß die Roststäbe (3) U-förmig mit kurzen vertikalen Schenkeln (12, 13) ausgebildet sind.

3. Rost nach Anspruch 1 oder 2,
   dadurch gekennzeichnet,
   daß an den Roststäben (3) den Abstand zwischen zwei
   Roststäben (3) überbrückende Distanzstücke (4) angebracht sind.

4. Rost nach einem oder mehreren
   der vorhergehenden Ansprüche,
   dadurch gekennzeichnet,
   daß unterhalb des oberseitigen Trums der Ketten (1,
   2) Tragschienen (5, 6) angeordnet sind.

5. Rost nach einem oder mehreren
   der vorhergehenden Ansprüche,
   dadurch gekennzeichnet,
   daß zwischen den Rollen (7, 8) des abwurfseitigen
   Rollenpaares eine die Rostbreite überspannende,
   etwa dem Rollendurchmesser entsprechende, zylindrische Trommel (11) drehbar angeordnet ist.

6. Rost nach einem oder mehreren
   der vorhergehenden Ansprüche,
   dadurch gekennzeichnet,
   daß die Ketten (1, 2) Rundglieder-Ketten sind.

7. Rost nach einem oder mehreren
   der vorhergehenden Ansprüche,
   dadurch gekennzeichnet,
   daß die Ketten (1, 2) Gelenkketten sind.

0038554

Fig. 1

Fig. 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 135 035 (L. SCHNELL)<br><br>* Seite 4, Zeile 9 bis Seite 7, Zeile 7; Ansprüche 1-3,7; Figuren 1-3 *<br>--- | 1,3-5, 7 |
| X | GB - A - 456 930 (GAS LIGHT AND COKE COMPANY)<br><br>* Seite 1, Zeile 72 bis Seite 2, Zeile 79; Figuren 1-4 *<br>--- | 1,3,4, 7 |
| X | DE - C - 487 587 (MÜLLER)<br><br>* Insgesamt *<br>--- | 1,2,7 |
| X | US - A - 1 875 562 (HARVEY D. CLUTE)<br><br>* Insgesamt * | 1,7 |

---------

**KLASSIFIKATION DER ANMELDUNG** (Int. Cl.³)

B 07 B 1/10
B 07 B 13/16
B 65 G 17/12

**RECHERCHIERTE SACHGEBIETE** (Int. Cl.³)

B 07 B
B 65 G
B 02 C
B 03 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30.07.1981 | LAVAL |

EPA form 1503.1  06.78